# EUROPÄISCHE PATENTSCHRIFT

(11) **EP 0 661 483 B1**
(45) Veröffentlichungstag und Bekanntmachung des Hinweises auf die Patenterteilung: **15.05.1996**
(21) Anmeldenummer: 94118549.8
(22) Anmeldetag: 25.11.1994
(51) Int. Cl.: F16K 24/04, E03F 5/08

(54) **Ventil zur Ent- und Belüftung einer Abwasserleitung**
Valve for venting and aerating a waste water conduit
Valve pour la désaération et l'aération d'un conduit pour eaux usées

(30) Priorität: 08.12.1993 DE 4341803
(43) Veröffentlichungstag der Anmeldung: 05.07.1995
(73) Patentinhaber: STRATE GmbH MASCHINENFABRIK FÜR ABWASSERTECHNIK, D-30880 Laatzen-Rethen (DE)
(72) Erfinder: Treuner, Holger, D-30419 Hannover (DE)
(74) Vertreter: Patentanwälte Thömen & Körner

(56) Entgegenhaltungen:
- DE-A- 2 800 556
- DE-B- 1 193 379
- FR-A- 2 232 723
- GB-A- 274 633
- US-A- 2 029 163

## Beschreibung

Die Erfindung betrifft ein Ventil zur Ent- und Belüftung einer Abwasserleitung gemäß dem Oberbegriff des Patentanspruchs 1.

Es sind bereits Ventile bekannt, die zugleich eine Ent- und Belüftung eines Flüssigkeitssystems (entweder einer Leitung oder auch eines Behälters) bewirken können. In ihrer einfachsten Ausgestaltung bestehen diese Ventile aus einem an das System angeschlossenen Gehäuse mit einem Zulauf an der Unterseite und einer Öffnung an der Oberseite, wobei unterhalb der Öffnung Führungen für einen als Kugel ausgebildeten Schwimmer angeordnet sind.

Solange das System nicht völlig mit Flüssigkeit gefüllt ist und nur Luft in dem Gehäuse enthalten ist, befindet sich die Kugel im Abstand unterhalb der Öffnung, so daß bei Betriebsbeginn während des Füllens des Systems die Luft durch die Öffnung hindurch ungehindert nach außen entweichen kann. Wenn danach im Verlaufe des weiteren Füllvorganges die Flüssigkeit in das Gehäuse eintritt, schwimmt die Kugel auf und verschließt die obere Öffnung, bevor der Flüssigkeitspegel dorthin gelangt ist und Flüssigkeit nach außen austreten kann.

Der umgekehrte Vorgang spielt sich bei Betriebsende während des Entleerens des Systems ab, d.h., dann sinkt der Flüssigkeitspegel in dem Gehäuse wieder ab. Die Kugel gibt also die obere Öffnung wieder frei und das System wird wieder belüftet.

Diese bekannten einfachen Ventile reichen allerdings nur in solchen Fällen aus, wenn sich während des laufenden Betriebes nicht zusätzlich Gas aus der Flüssigkeit abscheidet oder wenn nur kurze Betriebsperioden, beispielsweise bei einer stetig abwechselnden Füllung und Entleerung eines Behälters oder einer Leitung vorkommen.

Aber schon bei leicht verunreinigten Flüssigkeiten, beispielsweise schon bei normalem Flußwasser, treten Gasabscheidungen auf, die dazu führen, daß sich im Laufe längerer Betriebsperioden das Gehäuse mit Luft füllt. Der innerhalb des Gehäuses vorherrschende Druck verhindert es aber, daß die Kugel mit dem absinkenden Flüssigkeitsstand die Öffnung freigibt. Damit ist selbst dann, wenn sich das gesamte Gehäuse mit Luft gefüllt hat, keine Entlüftung des Systems mehr möglich. Erst bei nachlassendem Druck, also bei einer Unterbrechung des Betriebes, kann die Kugel die Öffnung freigeben und die erforderliche Entlüftung kann eintreten.

Zur Beseitigung des beschriebenen Nachteils sind auch schon Ventile entwickelt worden, die mit zwei Öffnungen an der Oberseite des Gehäuses ausgerüstet sind, nämlich mit einer großen Öffnung zur schnellen Entlüftung und Belüftung bei Betriebsbeginn, Betriebsende bzw. Betriebsunterbrechung, und mit einer kleinen Öffnung, die während des laufenden Betriebes wirksam ist. Beiden genannten Öffnungen ist dabei jeweils ein als Kugel ausgebildeter Schwimmer zugeordnet.

Der Durchmesser der kleinen Öffnung ist so gewählt, daß die Kugel bei absinkendem Flüssigkeitsspiegel in Folge einer Gasabscheidung während des laufenden Betriebes auch dann abfallen kann, wenn sich innerhalb des Gehäuses eine Druckdifferenz zwischen dem Gehäuseinnendruck und dem Umgebungsdruck außerhalb des Gehäuses aufgebaut hat. Dadurch kann das laufend abgeschiedene und in dem Gehäuse eingeschlossene Gas durch die kleine Öffnung hindurch entweichen, bis der dann entstehende Flüssigkeitsspiegel die Kugel für die kleine Öffnung so weit angehoben hat, daß die kleine Öffnung wieder verschlossen ist.

Diese Ventile sind jedoch nur für einfache Anlagen und für relativ saubere Flüssigkeiten mit einer relativ geringen Gasabscheidung geeignet. Für Abwasseranlagen und insbesondere für Abwasserleitungen können sie demgegenüber nicht eingesetzt werden.

Ein gewichtiges Problem bei Abwasserleitungen besteht nämlich darin, daß die im Abwasser zwangsläufig mitgeführten Verunreinigungen insbesondere die kleine Öffnung innerhalb des voranstehend beschriebenen Ventils sehr rasch zusetzen, so daß schon nach einer kurzen Zeit von weniger als einem Tag die kleine Öffnung gereinigt werden muß.

Generell ist bei Abwasserleitungen zu beachten, daß bei der Förderung von Abwasser beträchtliche abzuführende Gasmengen vorhanden sind. Der hohe Gasanteil rührt nicht nur aus Fäulnisgasen innerhalb des Abwassers her, sondern entsteht vor allem auch dadurch, daß einem über längere Entfernungen von beispielsweise mehreren Kilometern transportiertem Abwasser fortlaufend Luft bzw. Sauerstoff zugeführt werden muß, damit es am Ende der Transportstrecke noch genauso leicht abbaubar bleibt wie vorher. Auch diese Gase müssen entlang der Transportstrecke der Abwasserleitung langsam wieder beseitigt werden, da es andernfalls durch Gaseinschlüsse in der Leitung zu so starken Rückschlägen kommen kann, daß die Gefahr eines Leitungsbruches besteht.

Deshalb genügt bei längeren Abwasserleitungen nicht ein einzelnes Ventil. Vielmehr muß eine größere Anzahl von Ventilen entlang der Abwasserleitung angeordnet werden. Dadurch wird aber der Aufwand für die ständige Reinigung der Ventile gesteigert und vervielfacht.

Es entsteht dabei auch noch ein anderer wesentlicher Nachteil. In der ersten Entlüftungsphase während des Betriebsbeginns entweicht zunächst die in der Leitung befindliche Luft mit sehr hoher Geschwindigkeit durch die große Öffnung jedes Ventils. Entsprechend dem Vorankommen der Abwasserfront innerhalb der Leitung werden dann die großen Öffnungen der Ventile aufeinanderfolgend geschlossen, wobei jedoch noch nicht alles Gas aus der Leitung entfernt ist. Vielmehr sind in diesem Anfangsstadium noch überall Gaseinschlüsse vorhanden, die zum Teil erheblich komprimiert werden, was an den noch offenen Ventilen zu besonders hohen Geschwindigkeiten sowohl des ausströmenden Gases als auch der herannahenden Flüssigkeit führt.

Der beschriebene Effekt hat wiederum zur Folge, daß die großen Öffnungen der Ventile immer schlagartiger verschlossen werden. Durch das Abbremsen der Wassersäule entsteht nämlich innerhalb des Ventils ein sehr starker Druckstoß. Deshalb müssen solche Ventile Druckspitzen widerstehen, die annähernd dem 20-fachen des Nenndruckes entsprechen. Somit müssen solche Ventile sehr aufwendig und teuer gestaltet werden.

Durch die DE-PS 28 00 556, von der die Erfindung ausgeht, ist zur Beseitigung der beschriebenen Mängel ein Ventil bekannt, welches einen störungsfreien und dementsprechend wartungsfreien Betrieb über eine lange Zeitdauer gewährleistet und zugleich keine nennenswerten Druckspitzen beim Verschließen der großen Öffnung mehr entstehen läßt. Gleichwohl ist das Ventil relativ einfach im Aufbau und mit einer sicheren Führung der beiden Schwimmer versehen, so daß diese nicht verklemmen können.

Bei dem bekannten Ventil ist zwischen der großen Öffnung und der zugehörigen Schließringfläche für die Kugel ein von oben in das Gehäuse hineinragendes Rohr eingefügt. Der der kleinen Öffnung zugeordnete Schwimmer ist als ein mit mindestens einem an seinem oberen Ende angeordneten, in eine buchsenartige Führung eingreifenden Führungsstift senkrecht geführter Hohlkörper ausgebildet. Ferner ist die Schließringfläche am unteren Ende des Rohres unterhalb derjenigen Wasserstandshöhe in dem Gehäuse angebracht, bei welcher der Schwimmer für die kleine Öffnung infolge seines Aufschwimmens ein Verschließen der kleinen Öffnung bewirkt.

Eine besondere Maßnahme bei diesem bekannten Ventil besteht darin, daß der Ventilsitz für die der großen Öffnung zugeordnete Kugel von der Gehäuseoberseite aus in das Gehäuseinnere hineinverlagert ist, so daß die große Öffnung bereits bei einem sehr niedrigen Flüssigkeitsstand innerhalb des Ventilgehäuses verschlossen wird. Dadurch wird erreicht, daß die bei Betriebsbeginn zunächst turbulent mit sehr hoher Geschwindigkeit in das Gehäuse einschießende Flüssigkeit nach dem Verschließen der großen Öffnung einen sehr großen Puffer in Form eines oberhalb des Flüssigkeitsspiegels verbleibenden Gaspolsters vorfindet, von dem sie relativ weich abgebremst wird. Auf diese Weise können die bisher bei den anderen Ventilen auftretenden hohen Druckspitzen vermieden werden, und außerdem führt diese Maßnahme dazu, daß sich bereits in verhältnismäßig großem Abstand von der kleinen Öffnung ein verhältnismäßig ruhiger Flüssigkeitspegel ausbildet und zugleich eine verhältnismäßig große Gasmenge durch die kleine Öffnung hindurch entweichen muß, bevor diese sich ebenfalls schließt.

Dieses bekannte Ventil hat sich in seiner Anwendung zwar als durchaus praktikabel erwiesen, jedoch hat sich über den langen Einsatzzeitraum gezeigt, daß in bestimmten Fällen nicht allen Anforderungen entsprochen werden kann. In der Praxis ist nämlich des öfteren beobachtet worden, daß im laufenden Betrieb der mit dem Ventil versehenen Abwasserleitung Flüssigkeit aus dem Ventilgehäuse austritt, und zwar durch die große Öffnung des Ventils. Dies geschieht insbesondere an Hochpunkten der Abwasserleitung, an denen relativ niedrige Betriebsdrücke auftreten.

Hier greift nun die Erfindung ein, der die Aufgabe zugrunde liegt, das bekannte Ventil dahingehend zu verbessern, daß auch bei niedrigen Betriebsdrücken eine sichere Abdichtung für die Grobentlüftung gewährleistet ist und Undichtigkeiten des zugeordneten Ventilsitzes vermieden werden, um ein ungewolltes Austreten von Abwasser aus dem Ventilgehäuse zu verhindern.

Die Lösung dieser Aufgabe erfolgt bei dem im Oberbegriff des Patentanspruchs 1 genannten Ventil durch die Merkmale des kennzeichnenden Teils des Patentanspruchs.

Bei der Erfindung ist die große Auslaßöffnung für die Grobentlüftung direkt in der Oberseite des Gehäuses angeordnet, und außerdem ist die Auslaßöffnung teilweise durch eine Führungsstrebe versperrt, die mit einer mittigen Bohrung versehen ist, in die ein Führungsstift des zweiten Schwimmer zentrierend eingreift.

Der zweite Schwimmer für die Grobentlüftung ist als Hohlzylinder aus Kunststoff ausgebildet und besitzt an seiner Oberseite eine kugelförmig leicht gewölbte ballige Oberfläche, die zum Verschließen der großen Auslaßöffnung mit einer Schließringfläche der großen Auslaßöffnung zusammenwirkt. An seiner Unterseite ist der zweite Schwimmer mit einem sich in einer Schwimmerführung erstreckenden Zapfen versehen.

Die Erfindung geht von der Erkenntnis aus, daß auf den zweiten Schwimmer für die Grobentlüftung für die Schließung und Abdichtung des Ventilsitzes zwei Kräfte einwirken, nämlich zum einen der Auftrieb durch das Abwasser selbst und zum anderen der vorherrschende Betriebsdruck. Diese beiden Kräfte bilden zusammen die Schließkraft für den angestrebten dichten Ventilsitz.

Wenn der Betriebsdruck an den Hochpunkten der Abwasserleitung sehr niedrig - bzw. fast überhaupt nicht vorhanden - ist, ergibt sich bei dem bekannten Ventil eine nur geringe Schließkraft. Da sich im Abwasser naturgemäß Grobstoffe und Fremdstoffe befinden (z.B. Zigarettenkippen, Taschentücher usw.), die in den Bereich des Ventilsitzes gelangen, wird der Ventilsitz durch diese eingeklemmten Grobstoffe undicht, so daß - wie voranstehend beschrieben - Flüssigkeit nach außen austreten kann. Die Schließkraft reicht in solchen Fällen nämlich nicht aus, um die Undichtigkeiten durch eingeklemmte Grobstoffe zu beseitigen.

Ausgangspunkt der Erfindung ist weiter die Überlegung, daß man die Schließkraft insbesondere an den Hochpunkten der Abwasserleitung nicht ohne weiteres vergrößern kann.

Deshalb ist gemäß einem erfindungsgemäßen Merkmal die Maßnahme vorgesehen, den Ventilsitz für die Abdichtfunktion direkt in der Oberseite des Gehäuses und damit oberhalb des Flüssigkeitsspiegels anzuordnen, der für die Schließung der großen Auslaßöffnung für die Grobentlüftung erforderlich ist. Nachdem also bei der Erfindung die Schließringfläche bzw. der Ventilsitz außerhalb der Flüssigkeit angeordnet ist, wird der Gefahr von Undichtigkeiten durch Grobstoffe und Fremdstoffe, die sich im Abwasser selbst befinden, entgegengetreten. Insgesamt wird dadurch auch an Hochpunkten mit niedrigen Betriebsdrücken durch den hohen Auftrieb (Auftriebskraft) des Schwimmers eine hinreichend große Schließkraft für die Auslaßöffnung der Grobentlüftung gewährleistet, so daß der Nachteil des Austretens von Flüssigkeit beseitigt wird.

In Versuchen konnte übrigens festgestellt werden, daß das erfindungsgemäße Ventil sich nicht nur an Hochpunkten mit niedrigem Betriebsdruck der Abwasserleitung bewährt hat, sondern auch an solchen Punkten der Abwasserleitung, an denen durchaus große Betriebsdrücke auftreten. Somit kann das durch die Erfindung geschaffene neuartige Ventil nahtlos für alle Betriebsfälle und an allen Punkten einer Abwasserleitung an die Stelle des bekannten Ventils treten, mit dem wesentlichen Vorteil, daß auch bei niedrigen Betriebsdrücken eine hinreichend große Schließkraft des Ventilsitzes gewährleistet und ein Überschwappen bzw. Austreten von Flüssigkeit vermieden wird.

Neben dem Merkmal, daß bei der Erfindung der Schwimmer für die Grobentlüftung als Hohlzylinder ausgebildet ist, ist hervorzuheben, daß dieser über seinen oberen Führungsstift in der Führungsstrebe geführt wird, die sich selbst innerhalb der groben Auslaßöffnung direkt in der Oberseite des Gehäuses erstreckt und die grobe Auslaßöffnung dabei zum Teil versperrt.

Zweckmäßige Ausgestaltungen und vorteilhafte Weiterbildungen der Erfindung sind in den Unteransprüchen angegeben.

Nachfolgend wird die Erfindung anhand des in der Zeichnung dargestellten Ausführungsbeispiels näher erläutert. Es zeigen:

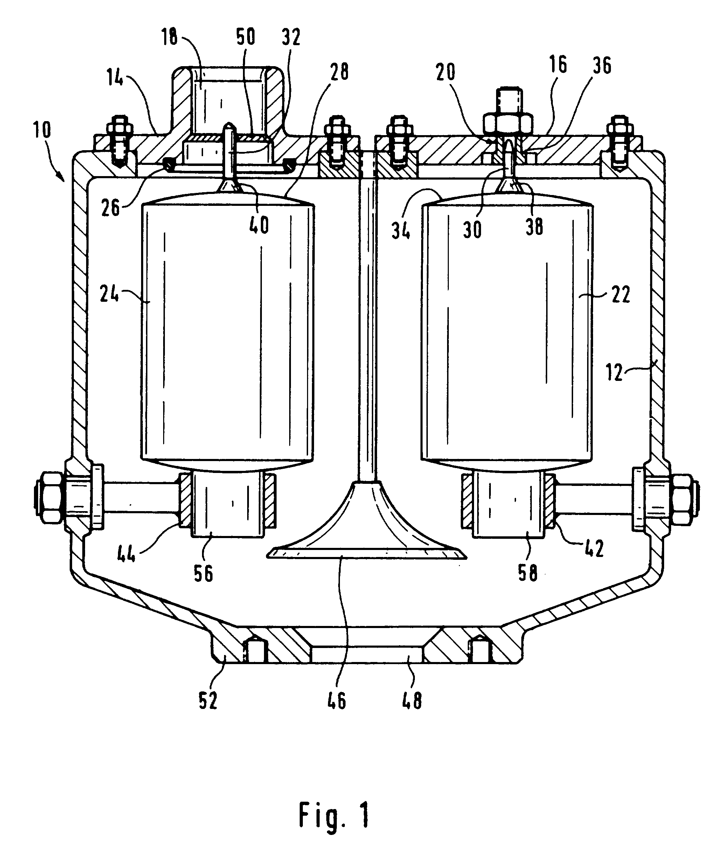

- Fig. 1: eine Querschnittsansicht eines erfindungsgemäßen Ventils mit zwei Schwimmern, und
- Fig. 2: eine Draufsicht auf ein Ventil gemäß Fig. 1.

Das Ausführungsbeispiel des als ganzes mit der Bezugsziffer 10 bezeichnete Ventil besitzt ein Gehäuse 12. An der Oberseite des Gehäuses 12 befinden sich ein linker Gehäusedeckel 14 sowie ein rechter Gehäusedeckel 16, und an seiner Unterseite besitzt das Gehäuse 12 einen Zulauf 48 für Abwasser. Der Zulauf 48 kann das Gehäuse 12 mit einer nicht näher dargestellten Abwasserleitung verbinden, und zwar über einen genormten Flanschanschluß 52.

Das Ventil 10 weist direkt an der Oberseite innerhalb des linken Gehäusedeckels 14 eine große Auslaßöffnung 18 auf, und in dem rechten Gehäusedeckel 16 befindet sich eine kleine Öffnung 20. Innerhalb des Gehäuses 12 sind ein erster Schwimmer 22 auf der rechten Seite sowie ein zweiter Schwimmer 24 auf der linken Seite angeordnet. Beide Schwimmer bestehen aus Kunststoff Polyethylene NCPE 8093 und sind als Hohlzylinder ausgebildet, die gegebenenfalls mit einem Ballaststoff verfüllbar sind.

Der erste Schwimmer 22 für die Feinentlüftung ist oben mit einer kugelförmig gewölbten Oberfläche 34 versehen, auf der sich mittig und senkrecht ein erster Führungsstift 30 erstreckt. Dieser Führungsstift 30 greift in die kleine Öffnung 20 ein und weist an seinem unteren Ende eine kegelstumpfartige Verdickung 38 auf. In der Schließstellung gelangt die kegelstumpfartige Verdickung 38 in einen Ventilsitz mit einer Dichtfläche 36, wodurch dann die kleine Öffnung 20 verschlossen wird.

An seinem unteren Ende besitzt der Schwimmer 22 einen Zapfen 58, welcher in eine Schwimmerführung 42 eingreift. Zusammen mit dem Führungsstift 30 wird auf diese Weise ein sichere Halterung und Führung des Schwimmers 22 gewährleistet. Dabei ist die Schwimmerführung 42 zur Aufnahme des Zapfens 58 an der seitlichen Gehäusewand des Gehäuses 12 befestigt.

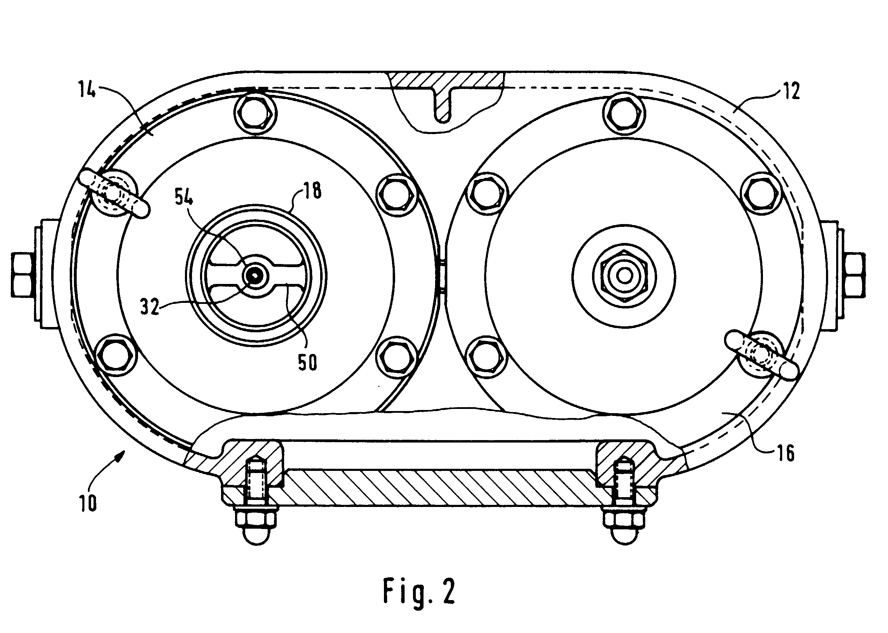

Der zweite Schwimmer 24 ist an seiner oberen Seite ebenfalls mit einer kugelförmig gewölbten balligen Oberfläche 28 ausgebildet, die in der Schließstellung des Schwimmers 24 mit einem O-Ring 26 an der unteren Seite des linken Gehäusedeckels 14 in Eingriff gelangt und den Ventilsitz bildet. Zur Führung und auch zur Zentrierung des Schwimmers 24 besitzt dieser mittig auf der Oberseite der gewölbten Fläche 28 einen Führungsstift 32. Wie insbesondere Fig. 2 verdeutlicht, erstreckt sich innerhalb der großen Auslaßöffnung 18 eine Führungsstrebe 50 in radialer Richtung, und in der Führungsstrebe 50 befindet sich mittig eine Bohrung 54. Der erwähnte Führungsstift 32 erstreckt sich innerhalb dieser Bohrung 54.

Ebenso wie der Führungsstift 30 des ersten Schwimmers 22 besitzt auch der Führungsstift 32 des zweiten Schwimmers 24 an seinem unteren Ende eine kegelstumpfartige Ver-dickung 40. Allerdings übernimmt diese Verdickung 40 hier keine Abdichtfunktion. Ihr unterer Teil dient lediglich als Anschlagfläche für den Führungsstift 32, der - was in der Zeichnung nicht ersichtlich ist - an seinem unteren Ende ein Gewinde besitzt und mit diesem in den oberen Teil des Schwimmers 24 bzw. der kugelförmig gewölbten Oberfläche 28 einschraubbar ist.

Vergleichbar dem rechten Schwimmer 22 besitzt auch der linke Schwimmer 24 an seinem unteren Ende einen Zapfen 56, der von einer Schwimmerführung 44 aufgenommen wird, die an der linken Gehäusewand des Gehäuses 12 befestigt ist.

Schließlich ist innerhalb des Gehäuses 12 des Ventils 10 oberhalb des Zulaufes 48 noch ein üblicher Prallteller 46 angeordnet.

Der in der Zeichnung dargestellte Betriebszustand des Ventils liegt vor Inbetriebnahme einer zu entlüftenden Abwasserleitung vor. Sobald nach Förderbeginn Abwasser in das Gehäuse 12 eindringt, steigt der Wasserspiegel, wobei der Schwimmer 24 nach oben bewegt und angehoben wird und schließlich in den Ventilsitz zur Abdichtung der großen Auslaßöffnung 18 gelangt. Der als Hohlzylinder ausgebildete Schwimmer 24 ist dabei so dimensioniert, daß die Schließstellung eingenommen wird, ohne daß der Flüssigkeitspegel den O-Ring 26 erreicht, d.h. die Schließringfläche liegt nicht im Abwasser, sondern außerhalb des Abwassers. Dadurch wird der Gefahr von Undichtigkeiten des Ventilsitzes durch eingeklemmte Grobstoffe entgegengetreten. Auch relativ geringe Auftriebskräfte bzw. Schließkräfte des Schwimmers 24 reichen also aus, um eine dichten Abschluß der großen Auslaßöffnung 18 zu bewirken.

Wenn die große Auslaßöffnung 18 verschlossen ist, kann das in dem Gehäuse 12 eingeschlossene Gas noch durch die kleine Öffnung 20 entweichen, die wegen ihrer kleinen Querschnittsfläche das Abströmen des Gases behindert. Dabei wirkt das verbleibende Gaspolster in dem Gehäuse 12 als Dämpfer gegen irgendwelche Druckwellen innerhalb der Wassersäule, wodurch sich Druckspitzen vermeiden lassen.

Mit zunehmender Entweichung des Gases aus dem Gehäuse 12 steigt der Flüssigkeitsspiegel innerhalb des Gehäuses 12 so weit an, daß auch der Schwimmer 22 aufschwimmt und die kegelstumpfartige Verdickung 38 in den Ventilsitz gelangt, so daß kein Gas mehr aus dem Gehäuse 12 entweichen kann.

Die Arbeitsweise und die Funktion des Ventils 10 entspricht somit grundsätzlich dem vorausgesetzten bekannten Ventil, jedoch mit dem Vorteil, daß auch bei niedrigen Betriebsdrücken eine sichere Abdichtung der großen Auslaßöffnung 18 erreichbar ist und ein nachteiliges Austreten von Flüssigkeit aus dem Gehäuse 12 vermieden wird.

## Patentansprüche

1. Ventil zur Ent- und Belüftung einer Abwasserleitung, mit einem Gehäuse (12) mit zwei darin parallel angeordneten Schwimmern (22, 24) sowie mit einer kleinen, an der Oberseite des Gehäuses (12) befindlichen und durch den ersten Schwimmer (22) verschließbaren Öffnung (20) für eine Feinentlüftung, und mit einer durch den zweiten Schwimmer (24) verschließbaren großen Auslaßöffnung (18) für eine Grobentlüftung, wobei der der kleinen Öffnung (20) zugeordnete erste Schwimmer (22) einen oberen, in die kleine Öffnung (20) eingreifenden, ersten Führungsstift (30) zur eigentlichen Abdichtung der kleinen Öffnung (20) besitzt und als Hohlzylinder ausgebildet ist, gekennzeichnet durch die folgenden Merkmale:
a) die große Auslaßöffnung (18) ist direkt in der Oberseite des Gehäuses (12) angeordnet,
b) die große Auslaßöffnung (18) ist teilweise durch eine Führungsstrebe (50) versperrt,
c) in der Führungsstrebe (50) befindet sich eine Bohrung (54),
d) benachbart zum Innenrand der großen Auslaßöffnung (18) ist auf der Innenseite der Oberfläche des Gehäuses (12) unterhalb der Führungsstrebe (50) eine Schließringfläche (26) angeordnet,
e) der zweite Schwimmer (24) für die Grobentlüftung ist als Hohlzylinder aus Kunststoff ausgebildet,
f) der zweite Schwimmer (54) für die Grobentlüftung besitzt an seiner Oberseite eine kugelförmig leicht gewölbte ballige Oberfläche (28),
g) auf der gewölbten balligen Oberfläche (28) ist mittig ein sich nach oben erstreckender senkrechter zweiter Führungsstift (32) angeordnet,
h) der zweite Führungsstift (32) erstreckt sich innerhalb der Bohrung (54) der Führungsstrebe (50),
i) der zweite Schwimmer (24) ist an seiner Unterseite mit einem sich in einer Schwimmerführung (44) erstreckenden Zapfen versehen.

2. Ventil nach Anspruch 1, dadurch gekennzeichnet, daß die große Auslaßöffnung (18) mit der Führungsstrebe (50) und der Bohrung (54) in einem oberen Gehäusedeckel (14) des Gehäuses (12) vorgesehen ist.

3. Ventil nach Anspruch 1 und/oder 2, dadurch gekennzeichnet, daß die Schließringfläche (26) durch einen in der Unterseite des Gehäusedeckels (14) befindlichen O-Ring gebildet ist.

4. Ventil nach Anspruch 1, dadurch gekennzeichnet, daß mindestens der erste Schwimmer (22) für die Feinentlüftung als mit einem Ballaststoff füllbarer Hohlzylinder aus Kunststoff ausgebildet ist.

5. Ventil nach Anspruch 1, dadurch gekennzeichnet, daß beide Schwimmer (22, 24) aus Kunststoff Polyethylene NCPE 8093 bestehen.

6. Ventil nach Anspruch 1 und/oder 4, 5, dadurch gekennzeichnet, daß der erste Schwimmer (22) für die Feinentlüftung einen Durchmesser von 125 mm sowie eine Länge von 230 mm besitzt.

7. Ventil nach Anspruch 1 und/oder 4, 5, dadurch gekennzeichnet, daß der zweite Schwimmer (24) für die Grobentlüftung einen Durchmesser von 125 mm sowie eine Länge von 200 mm besitzt.

## Claims

1. Valve for venting and aerating a waste water conduit, comprising a housing (12) having two floats (22, 24) disposed parallel therein and comprising a small opening (20) for fine venting, situated at the upper side of the housing (12) and closable by the first float (22), and comprising a large outlet opening (18) for a coarse venting, closable by the second float (24), wherein the first float (22) associated with the small opening (20) possesses an upper, first guide pin (30) engaging into the small opening (20) for the actual sealing of the small opening (20) and is constructed as a hollow cylinder, characterized by the following features:
a) the large outlet opening (18) is disposed directly in the upper side of the housing (12),
b) the large outlet opening (18) is partly closed by a guide bar (50),
c) a bore (54) is situated in the guide bar (50),
d) adjacent to the inner edge of the large outlet opening (18) a closure annular surface (26) is disposed on the inner side of the surface of the housing (12) beneath the guide bar (50),
e) the second float (24) for the coarse venting is constructed as a hollow cylinder of plastics,
f) the second float (24) for the coarse venting possesses, on its upper side, a spherically slightly domed surface (28),
g) on the domed surface (28) an upwardly pointing, vertical second guide pin (32) is centrally disposed,
h) the second guide pin (32) extends inside the bore (54) of the guide bar (50),
i) the second float (24) is provided, on its under side, with a spigot extending in a float guide (44).

2. Valve according to claim 1, characterized in that the large outlet opening (18) comprising the guide bar (50) and the bore (54) is provided in an upper housing cover (14) of the housing (12).

3. Valve according to claim 1 and/or 2, characterized in that the closure annular surface (26) is formed by an O-ring situated in the underside of the housing cover (14).

4. Valve according to claim 1, characterized in that at least the first float (22) for the fine venting is constructed as a hollow cylinder of plastics which can be filled with a ballast material.

5. Valve according to claim 1, characterized in that both floats (22, 24) are of plastics polyethylene NCPE 8093.

6. Valve according to claim 1 and/or 4, 5, characterized in that the first float (22) for the fine venting has a diameter of 125 mm and a length of 230 mm.

7. Valve according to claim 1 and/or 4, 5, characterized in that the second float (24) for the coarse venting has a diameter of 125 mm and a length of 200 mm.

## Revendications

1. Soupape pour la mise à l'atmosphère et la ventilation d'un conduit d'eaux usées comportant un carter (12) qui comporte deux flotteurs (22, 24) installés parallèlement, avec une petite ouverture (20) pour une mise à l'atmosphère fine sur la partie supérieure du carter (12) qui peut être fermée par le premier flotteur (22) et une grande ouverture d'échappement (18) pour une mise à l'atmosphère à réglage grossier qui peut être fermée par le second flotteur (24), le premier flotteur (22) associé à la petite ouverture (20) comportant une première tige de guidage (30) qui se loge en haut dans la petite ouverture (30) pour la boucher correctement et forme un cylindre creux, caractérisée par les caractéristiques suivantes:
a) la grande ouverture d'échappement (18) est directement installée dans la partie supérieure du carter (12),
b) la grande ouverture d'échappement (18) est partiellement obstruée par une entretoise de guidage (50),
c) dans l'entretoise de guidage (50), se trouve un trou (54),
d) au voisinage du bord interne de la grande ouverture (18), il y a sur le côté interne de la surface supérieure du carter (12) sous l'entretoise de guidage (50) une surface de bague de fermeture (26),
e) le second flotteur (24) pour la mise à l'atmosphère grossière est en plastique et a la forme d'un cylindre creux,
f) le second flotteur (24) pour la mise à l'atmosphère grossière comporte, sur son côté supérieur, une surface supérieure (28) légèrement bombée, voutée de forme sphérique,
g) sur la surface supérieure (28) bombée et voutée, est montée, au centre, une seconde tige de guidage (32) verticale et montant vers le haut,
h) la seconde tige de guidage (32) monte dans le trou (54) de l'entretoise de guidage (50),
i) le second flotteur (24) est pourvu, sur son côté inférieur, d'un tenon dans un guide de flotteur (44).

2. Soupape suivant la revendication 1, caractérisée en ce que la grande ouverture d'échappement (18), avec l'entretoise de guidage (50) et le trou (54), est prévue dans un couvercle supérieur (14) du carter (12).

3. Soupape suivant la revendication 1 et/ou 2, caractérisée en ce que la surface de la bague de fermeture (26) est un joint torique qui se trouve placé dans le côté inférieur du couvercle (14).

4. Soupape suivant la revendication 1, caractérisée en ce que le premier flotteur (22) destiné à la mise à l'atmosphère fine au moins est en plastique et a la forme d'un cylindre creux que l'on peut remplir de matière de ballast.

5. Soupape suivant la revendication 1, caractérisée en ce que les deux flotteurs (22, 24) se composent de plastique de polyéthylène NCPE 8093.

6. Soupape suivant la revendication 1 et/ou 4, 5, caractérisée en ce que le premier flotteur (22) destiné à la mise à l'atmosphère fine a un diamètre de 125 mm et une longueur de 230 mm.

7. Soupape suivant la revendication 1, caractérisée en ce que le second flotteur (24) destiné à la grande mise à l'atmosphère a un diamètre de 125 mm et une longueur de 200 mm.
